# EUROPEAN PATENT SPECIFICATION

(11) **EP 2 842 925 B1**
(45) Date of publication and mention of the grant of the patent: **06.11.2019**
(21) Application number: 13004314.4
(22) Date of filing: 03.09.2013
(51) Int. Cl.: C04B 28/06, C04B 7/32, C04B 111/60, C04B 111/00

(54) **Calcium sulfoaluminate composite binders**
Verbundstoff-Calciumsulfoaluminat-Bindemittel
Liants composites de sulfoaluminate de calcium

(43) Date of publication of application: 04.03.2015
(73) Proprietor: HeidelbergCement AG, 69120 Heidelberg (DE)
(72) Inventor: Bullerjahn, Frank, 69181 Leimen (DE); Ben Haha, Mohsen, 69117 Heidelberg (DE); Schmitt, Dirk, 69181 Leimen (DE); Mikanovic, Ingrid, 69181 Leimen (DE)
(74) Representative: Zellentin & Partner mbB Patentanwälte

(56) References cited:
- FR-A1- 2 949 112
- GB-A- 2 489 981
- ARJUNAN P ET AL: "Sulfoaluminate-belite cement from low-calcium fly ash and sulfur-rich and other industrial by-products", CEMENT AND CONCRETE RESEARCH, PERGAMON PRESS, ELMSFORD, NY, US, vol. 29, no. 8, 2 January 1999 (1999-01-02), pages 1305-1311, XP002320781, ISSN: 0008-8846, DOI: 10.1016/S0008-8846(99)00072-1
- QUILLIN K.: "LOW-C02 CEMENTS BASED ON CALCIUM SULFOALUMINATE", BRE , June 2013 (2013-06), pages 1-59, XP002721170, Retrieved from the Internet: URL:http://www.soci.org/News/Construction/ ~/media/Files/Conference%20Downloads/2010/ Low%20Carbon%20Cements%20Nov%2010/Sulphoal uminate_Cements_Keith_Quillin_R.ashx
- V.Morin, G.Walenta, E.Gartner: "Hydration of belite calcium sulfo-aluminate", ICCC Madrid , 4 July 2011 (2011-07-04), XP002721171, Retrieved from the Internet: URL:http://www.scribd.com/doc/67431197/Aet her-Cement-ICCC-Madrid-Final-2011-07-04 [retrieved on 2014-03-05]
- FRANK WINNEFELD ET AL: "Calorimetric and thermogravimetric study on the influence of calcium sulfate on the hydration of ye'elimite", JOURNAL OF THERMAL ANALYSIS AND CALORIMETRY, KLUWER ACADEMIC PUBLISHERS, DORDRECHT, NL, vol. 101, no. 3, 3 December 2009 (2009-12-03), pages 949-957, XP019825088, ISSN: 1572-8943

## Description

The present invention relates to binders comprising calcium sulfoaluminate based cement / clinker types and supplementary cementitious materials, a method of manufacturing composite binders and to their use for making hydraulically setting building materials or special construction chemical compositions.

Calcium sulfoaluminate (CSA) cements are made from clinkers that include ye'elimite (Ca₄(AlO₂)₆SO₄ or C₄A₃$ in cement chemist's notation) as a major phase. These binders are used as constituents in expansive cements, in ultra-high early strength cements and in "low-energy" cements. Hydration of CSA cements leads to the formation of mainly ettringite and/or monophases as e.g. monosulfate. Aluminium hydroxide may probably be another hydration product of this binder. The amount and kinetics of formation strongly depend on the cement composition as e.g. the amount and type of sulfate bearing phases being present. Special physical properties (such as intentional expansive behaviour or rapid reaction) are obtained by the adjustment of the availability of calcium and sulfate ions. The use of CSA cement as a low-energy alternative to Portland cement has been pioneered in China, where several million tons per year are produced. The energy demand for production is lower because of the decreased kiln temperatures required for reactions, the better grindability and the lower amount of limestone in the raw mix, which needs to be endothermically decarbonated. In addition, the lower limestone content and lower fuel consumption leads to a CO₂ emission around half of that of Portland cement clinker.

Within the context of the present invention, clinker shall mean a sinter product which is obtained by burning a raw material mixture at an elevated temperature and which contains at least one hydraulically reactive phase. Cement denotes a clinker that is ground with or without adding further components. Binder or binder mixture denotes a mixture hardening hydraulically and comprising cement and typically, but not necessarily, additional finely ground components, and which is used after adding water, optionally admixtures and/or additives and aggregate. A clinker may already contain all the necessary or desired phases and be used directly as a binder after being ground to cement.

Another approach to save energy and valuable raw materials is the application of secondary raw materials or industrial by-products as raw meal components to replace primary mineral based raw materials during clinker production.

In a further approach supplementary cementitious materials, which are often industrial by-products or wastes, are used to replace parts of the clinker during cement production and therefore save energy and primary raw material sources. These materials most often possess a pozzolanic or latent hydraulic reactivity and contribute to the mechanical performance of these composite binders.

Constituents that are permitted in Portland-composite cements are artificial pozzolans (like e.g. blastfurnace slag, silica fume, synthetic glasses and fly ashes) or natural pozzolans (like e.g. siliceous or siliceous aluminous materials such as volcanic ash glasses, calcined clays and shale). Portland blastfurnace cement contains up to 70% ground granulated blast furnace slag, the rest being Portland clinker and a little sulfate as e.g. gypsum. These composite cements typically produce high ultimate strength, but as slag content is increased, early strength is reduced, while potentially sulfate resistance increases and heat evolution diminishes. Portland fly ash cement contains up to 35% fly ash. The fly ash possesses a pozzolanic behaviour, so that ultimate strength is maintained or even increased. Because fly ash addition allows a lower water to binder ratio and as a result thereof a lower total water content, early strength can also be maintained.

Supplementary cementitious materials can be divided into latent hydraulic materials and pozzolans. Latent hydraulic materials are not hydraulic on their own or react only very slowly. They need an activation to undergo hydraulic reaction within useful time periods. Activation is typically achieved by (addition of) earth alkali metal or alkali metal compounds (e.g. Ca(OH)₂, NaOH, KOH, etc.) or sulfate providing materials (CaSO₄, Na₂SO₄, K₂SO₄, etc.), which are able to support the formation of calcium (aluminium) silicate hydrates and/or ettringite and/or others like e.g. AFₘ-phases (strätlingite, monosulfate, monocarbonate hemicarbonate etc.) or zeolite-like mineral. Pozzolans are siliceous or alumino-siliceous materials that react with calcium hydroxide from other components of a binder to form calcium silicate hydrates. The foregoing distinction is not always applied strictly, i.e. many fly ashes contain considerable amounts of calcium and are latent hydraulic materials, therefore, but usually they are designated pozzolans, nonetheless. For the present invention the distinction is not important and both are summarized as supplementary cementitious materials, partly abbreviated SCM herein.

Typical supplementary cementitious materials are natural or artificial pozzolans and latent hydraulic materials, e.g. but not exclusively ground granulated blast furnace slag, and natural or artificial pozzolans, e.g. but not exclusively type-C and/or type-F fly ashes, calcined clays or shales, trass, brick-dust, artificial glasses, silica fume, and burned organic matter residues rich in silica such as rice husk ash or mixtures thereof.

A problem of portland cement and portland-composite cements is the increasing demand of high early strength. Time granted for construction is continuously decreasing. In the manufacturing of building elements a fast form removal is desired to optimize investment return. Therefore, binders providing high early strength are required, of course without decreasing ultimate strength, durability or workability. There further remains the object to provide cements that have a minimal environmental impact with regard to energy and natural raw materials.

There have been some proposals to add SCM to calcium sulfoaluminate cements.

According to GB 2490010 describes cementitious compositions containing (a) 60-94% of at least one pozzolanic material; (b) at least 0.5% calcium sulfoaluminate; (c) 1.2-11%, expressed as SO₃, of at least one inorganic sulfate; and (d) a total sulfate content, expressed as SO₃, of at least 3 %, wherein the cementitious composition includes, at most 3% natural lime, and at most 10% alumina cement. Strength development of this system is mainly based on ettringite, it is a so called super sulfated system with a ratio of calcium sulfate to ye'elimite + aluminates + ferrites of more than 1, the CSA and at least one source of CaO / Ca(OH)₂, originating from the addition of e.g. CaO or OPC, is used as activator for early strength.

In Zivica V., "Possibility of the modification of the properties of sulfoaluminate belite cement by its blending", Ceramics - Silikaty 45 (1), 24-30, (2001) the addition of 5 %, 15 % and 30 % SCM to a CSA cement containing about 53 % C₂S, 34 % C₄A₃$, 8 % C₄AF and 5 % C$ is studied. From the explanations it is apparent that overburned or "dead burned" anhydrite is part of the clinker and that the SCMs are mostly performing as inactive fillers. Consequently, the article suggests that SCM contents below 15 % are optimal. A significant energy saving seems not possible therewith.

In Quillin K., BRE "Low-CO2 Cements based on Calcium Sulfoaluminate" (http://www.soci.org/News/~/media/Files/Conference%20Downloads/ Low%20Carbon%20Cements%20Nov%2010/Sulphoaluminate_Cements_Keith_ Quillin_R.ashx, status June 2013), the impact of adding 30 or 50 % ground granulated blast furnace slag or 30 % fly ash as well as the impact of sulfate content to a CSA cement containing about 22 % C₂S, 60 % C₄A₃$, 7 % C₄AF, 8 % C₃S and 5 % C₃A is studied. The ratio of calcium sulfate to the sum of C₄A₃$, aluminates and ferrites is adjusted to 0, 0.35, 0.93 or above 1.

Surprisingly it was now found that composite binders comprising calcium sulfoaluminate cement and supplementary cementitious materials with a weight ratio R_{$/(Y+A+F)} of calcium sulfate to the sum of ye'elimite, aluminates and ferrites in the range from 0.5 to 0.9 provide good early and ultimate strength, while further diminishing the environmental impact compared to binders based on calcium sulfoaluminate cements without addition of SCMs. R_{$/(Y+A+F)} especially stands for CaSO₄ / (∑ ye'elimite + ∑ aluminates + ∑ ferrites), wherein
- CaSO₄ represents the quantity of anhydrous calcium sulfate originating from CaSO₄, CaSO₄·0.5H₂O, or CaSO₄·2H₂O present in the binder
- Ye'elimite represents C₄A₃₋ₓFₓ$ with x ranging from 0 to 2, C₄A₃$ with other substitutions with one or more foreign ions, or mixtures thereof
- ∑ Aluminates represents the sum of all phases based on calcium aluminates, preferably it means CA, C₁₂A₇, CA₂, C₃A, amorphous aluminate phases and mixtures thereof
- ∑ Ferrites represents the sum of all phases based on calcium oxide and iron oxide, preferably it means C₂A_{y}F_{1-y}, with y ranging from 0.2 to 0.8, C₂F, CF, CF₂, amorphous ferritic phases and mixtures thereof.
Phases such as C₄A₃₋ₓFₓ$, C₂A_{y}F_{1-y}, CA, C₁₂A₇, CA₂, C₃A, C₂F, CF, CF₂ etc. can be crystalline, partly crystalline or amorphous. The phases mentioned could and typically do contain substitutions with foreign ions (or other/additional foreign ions than those stated explicitly), as is common with technical materials. In the case of phases containing C, A and F it does not matter whether they are considered as aluminates or as ferrites, as long as they are included and not calculated twice.

Calcium sulfate can also be present within the supplementary cementitious materials or in the CSA clinker. This calcium sulfate also has to be taken into account for the calculation of P_{$/(Y+A+F)}. Amorphous aluminate or ferritic phases are special forms of e.g., but not exclusively, C₁₂A₇, CA, C₄AF, CF. Aluminates and/or ferrites introduced by the addition of further components like calcium aluminate or Portland cements to the binder have to be considered as well for the calculation of R_{$/(Y+A+F)}.

The present invention solves the above mentioned problems with a composite binder comprising calcium sulfoaluminate cement comprising 20 - 80 % by weight C₄A₃₋ₓFₓ$, with x ranging from 0 to 2, 0 - 70 % by weight C₂S, 3 - 30 % by weight aluminates selected from CA, C₁₂A₇, CA₂, C₃A, 0 - 30 % by weight ferrites selected from C₂A_{y}F_{1-y} with y ranging from 0.2 to 0.8, C₂F, CF, CF₂, 0 - 30 % by weight ternesite, 0 - 30 % by weight calcium sulfate and up to 20 % minor phases wherein the phases can be present in the CSA clinker or added for obtaining the CSA cement, and supplementary cementitious materials with a weight ratio of sulfate to the sum of ye'elimite, aluminates and ferrites in the range from 0.5 to 0.9, wherein preferably
- calcium sulfate means the quantity of anhydrous calcium sulfate originating from CaSO₄, CaSO₄·0.5 H₂O, and CaSO₄·2 H₂O present in the binder,
- ye'elimite means the content of C₄A₃₋ₓFₓ$, with x ranging from 0 to 2, C₄A₃$ with other substitutions with one or more foreign ions, or mixtures thereof
- aluminates stands for the content of e.g., but not exclusively, CA, C₁₂A₇, CA₂, C₃A, amorphous aluminate phases or mixtures thereof, and
- ferrites stands for the content of e.g., but not exclusively, C₂A_{y}F_{1-y}, with y ranging from 0.2 to 0.8, C₂F, CF, CF₂, amorphous ferritic phases or mixtures thereof and their use to make hydraulically setting building materials or special construction chemical compositions. It further meets the object with a method of manufacturing a composite binder comprising the steps:
   a) providing at least one calcium sulfoaluminate cement
   c) providing at least one supplementary cementitious material
   d) mixing 10 to 80 % by weight calcium sulfoaluminate cement(s) with 20 to 90 % by weight supplementary cementitious material(s), wherein the weight ratio R_{$/(Y+A+F)} of sulfate to the sum of ye'elimite, aluminates and ferrites ranges from 0.5 to 0.85.

To simplify the description, the following abbreviations, which are common in the cement industry, are used: H - H₂O, C - CaO, A - Al₂O₃, F - Fe₂O₃, M - MgO, S - SiO₂ und $ - SO₃. Additionally, compounds are generally indicated in the pure forms thereof, without explicitly stating series of solid solutions/substitution by foreign ions and the like, as are customary in technical and industrial materials. As any person skilled in the art will understand, the composition of the phases mentioned by name in the present invention may vary, depending on the chemism of the raw meal and the type of production, due to the substitution with various foreign ions, such compounds likewise being covered by the scope of the present invention.

The supplementary cementitious materials can be chosen from all available materials showing latent hydraulic and/or pozzolanic properties. Preferred are ground granulated blast furnace slag, fly ashes type C and F and natural pozzolans, calcined clays or shales, trass, artificial glasses, other slags than ground granulated blast furnace slag, brick-dust and burned organic matter residues rich in silica such as rice husk ash. Especially preferred are calcium-rich artificial glasses, type C fly ashes and ground granulated blast furnace slags.

Calcium sulfoaluminate clinkers contain mainly polymorphs of ye'elimite. Depending on the raw materials used and the burning temperature they typically also contain belite, ferrites and/or aluminates, anhydrite and may further contain ternesite, see e.g. WO 2013/023728 A2. Calcium sulfoaluminate cements are obtained from CSA clinkers by grinding, usually calcium sulfate is added. Manufacturing of the calcium sulfoaluminate cements takes place in a manner known per se. Typically raw materials are mixed in appropriate amounts, ground and burnt in a kiln to give a clinker. Usually, the clinker is then ground together with calcium sulfate and optionally some or all of the other components to give the cement. A separate grinding is also possible and may be advantageous when the grindability of the components is largely different. The calcium sulfate can be gypsum, bassanite, anhydrite or mixtures thereof. Anhydrite is preferably used.

A calcium sulfoaluminate cement can be obtained by grinding a CSA clinker when that already contains the desired amount of calcium sulfate. Typically, it is obtained by combining CSA clinker with adequate amounts of calcium sulfate. This means that as defined for the present invention the component CSA cement provides ye'elimite and sulfate, as well as optionally aluminates, ferrites, belite and other components, regardless of whether they originate from the CSA clinker or from a mixing of CSA clinker with them, either before, during or after grinding of the CSA clinker. Of course, sulfate, ye'elimite, aluminates, and ferrites can also originate from the SCM component or the optional additional components of the composite binder, so that less is desired in the CSA cement. This means that for manufacturing the binder the sulfate (and also any other phase) can originate from the CSA clinker, the CSA cement, the SCM and even from additional components. With respect to the the sulfate it does not matter whether it is added to the CSA clinker before mixing with the SCM or during mixing, i.e. the CSA cement can be added as one component or as two components, namely ground CSA clinker and ground sulfate.

Calcium sulfoaluminate clinkers and cements containing C₄A₃$ as a main phase are known and available in different qualitites / compositions. For example, the following CSA cements are (commercially) available / known:

### Lafarge BCSAF:

| | | | |
|---|---|---|---|
| Belite (α; +/-β) C₂S | 40 - 75%; | Ye'elimite C₄A₃$ | 15 - 35%; |
| Ferrite C₂(A,F) | 5 - 25%; | Minor phases | 0.1 - 10% |

### Lafarge Rockfast®:

| | | | |
|---|---|---|---|
| Belite (α; +/-β) C₂S | 0 - 10%; | Ye'elimite C₄A₃$ | 50 - 65% |
| Aluminate CA | 10 - 25%; | Gehlenite C₂AS | 10 - 25%; |
| Ferrite C₂(A,F) | 0 - 10%; | Minor phases | 0 - 10% |

### Italcementi Alipre®:

| | | | |
|---|---|---|---|
| Belite (α; +/-β) C₂S | 10 - 25%; | Ye'elimite C₄A₃$ | 50 - 65%; |
| Anhydrite C$ | 0 - 25%; | Minor phases | 1 - 20% |

### Cemex CSA:

| | | | |
|---|---|---|---|
| Belite (α; +/-β) C₂S | 10 - 30%; | Ye'elimite C₄A₃$ | 20 - 40% |
| Anhydrite C$ | >1%; | Alite C₃S | >1 - 30%; |
| Free lime CaO | <0.5 - 6%; | Portlandite Ca(OH)₂ | 0 - 7%; |
| Minor phases | 0 - 10% | | |

### Denka® CSA

| | | | |
|---|---|---|---|
| Belite (α; +/-β) C₂S | 0 - 10%; | Ye'elimite C₄A₃$ | 15 - 25%; |
| Anhydrite C₂(A,F) | 30 - 40%; | Portlandite Ca(OH)₂ | 20 - 35%; |
| Free lime CaO | 1 - 10%; | Minor phases | 0 - 10% |

### China Type II & III CSA

| | | | |
|---|---|---|---|
| Belite (α; +/-β) C₂S | 10 - 25%; | Ye'elimite C₄A₃$ | 60 - 70%; |
| Ferrite C₂(A,F) | 1 - 15%; | Minor phases | 1 - 15% |

### Barnstone CSA

| | | | |
|---|---|---|---|
| Belite (α; +/-β) C₂S | 22%; | Ye'elimite C₄A₃$ | 60%; |
| Aluminate C₁₂A₇ | 5%; | Alite C₃S | 8%; |
| Ferrite C₂(A,F) | 4%; | Minor phases | 1% |

### HeidelbergCement BCT

| | | |
|---|---|---|
| Belite (α; +/-β) C₂S | 1 - 80%; | Ye'elimite ∑C₄A₃$ 5 -70%; |
| Ternesite C₅S₂$ | 5 - 75%; | Minor phases 0 - 30%; |

The calcium sulfoaluminate clinker or cement usually comprises 10 - 100 % by weight, preferably 20 - 80 % by weight and most preferred 25 to 50 % by weight C₄A₃₋ₓFₓ$, with x ranging from 0 to 2, preferably from 0.05 to 1 and most preferably from 0.1 to 0.6. It typically further comprises 0 - 70 % by weight, preferably 10 to 60 % by weight and most preferred 20 to 50 % by weight C₂S, 0 - 30 % by weight, preferably 1 to 15 % by weight and most preferred 3 to 10 % by weight aluminates, 0 - 30 % by weight, preferably 3 to 25 % by weight and most preferred 5 to 15 % by weight ferrites, 0 - 30 % by weight preferably 3 to 25 % by weight and most preferred 5 to 15 % by weight ternesite, 0 - 30 % by weight, preferably 5 to 25 % by weight and most preferred 8 to 20 % by weight calcium sulfate and up to 20 % minor phases. According to the invention a CSA cement comprising 20 - 80 % by weight C₄A₃₋ₓFₓ$, with x ranging from 0 to 2, 0 - 70 % by weight C₂S, 3 - 30 % by weight aluminates selected from CA, C₁₂A₇, CA₂, C₃A, 0 - 30 % by weight ferrites selected from C₂A_{y}F_{1-y} with y ranging from 0.2 to 0.8, C₂F, CF, CF₂, 0 - 30 % by weight ternesite, 0 - 30 % by weight calcium sulfate and up to 20 % minor phases is used. As indicated, phases can be present in the CSA clinker or added for obtaining the CSA cement.

The invention is beneficial to all kinds of calcium sulfoaluminate cements both belite rich and poor ones as well as with differing amounts of aluminates and ferrites as long as the weight ratio R_{$/(Y+A+F)} in the composite binder is maintained in the range from 0.5 to 0.85. With a ratio below 0.5 only minor or even no contribution of the cementitious material is observed as regards strength development. With a ratio above 0.9 an expansion accompanied by the formation of fine to even large cracks has been observed already after 24 hours of hydration of mortar prisms made with the composite cements. Higher levels of sulfate addition lead to even more pronounced expansion and cracking. Preferably, the weight ratio according to the invention is set from 0.55 to 0.85, especially preferred from 0.6 to 0.85. Within the ranges a higher ratio leads to a higher increase of strength within shorter times, i.e. a higher ratio accelerates the strength development. Any sulfate, aluminate, ferrite or ye'elimite from the supplementary cementitious materials and other components is taken into account when calculating the ratio.

The supplementary cementitious materials can be added according to the invention in amounts of at least 10 % and up to 90 % by weight, preferably 20 to 80 % by weight are added. The quantity of latent hydraulic materials in the SCM usually ranges from 0 to 100 % by weight, preferably from 20 to 80 % by weight and most preferably from 30 to 70 % by weight of the of the total amount of SCM. The content of pozzolanic materials ranges from 0 to 40 % by weight, preferably from 5 to 35 % by weight and most preferably from 10 to 30 % by weight of the total amount of supplementary cementitious materials.

The preferred amount of SCM in the binder depends on the reactivity of the SCM. If the SCM is only or mainly latent hydraulic materials the preferred amount of addition ranges from 10 to 90 % by weight, most preferred 30 to 60 % by weight. When only or mainly pozzolanic materials are used, the SCM is preferably added in an amount of 10 to 40 % by weight, most preferred 20 to 30 % by weight. The preferred amounts of SCMs that are mixtures of latent hydraulic and pozzolanic materials depends on the reactivity of the SCM mixture used. Namely, more reactive SCM mixtures are preferably used in higher amounts than those with a low, mainly pozzolanic reactivity.

In a further embodiment of the invention the calcium sulfoaluminate cement or binder therefrom has a fineness, according to the particle size distribution determined by laser granulometry, with a d₉₀ ≤ 90 µm, preferably a d₉₀ ≤ 60 µm and most preferred a d₉₀ ≤ 40 µm, whereby the Rosin Rammler Parameter (slope) n can vary from 0.7 to 1.5, preferably from 0.8 to 1.3 and most preferably from 0.9 to 1.15.

The cement according to the invention is obtained by grinding the clinker, with or without addition of further substances. Usually, calcium sulfate is added before or during grinding when its content in the clinker is not as desired. It can also be added after grinding.

Further components chosen from e.g. but not exclusively calcium aluminate cements, portland cement or portland cement clinker, lime stone, dolomite, ternesite, alkali and/or earth alkali salts can be added in amounts of 0.01 to 20 % by weight, preferably in amounts ranging from 0.5 to 15 % by weight. It is especially preferred when a content of portland cement clinker, limestone, ternesite and/or dolomite ranges from 0.01 to 20 % by weight, preferably from 3 to 20 % by weight and most preferred from 5 to 15 % by weight and a content of alkali salts and earth alkali salts ranges from 0 % to 5 % by weight, preferable from 0.1 to 3 % by weight and most preferred from 0.5 to 2 % by weight.

Furthermore, common admixtures and/or additives can be present. Admixtures are preferably added in an amount of up to 20 % by weight, additives in an amount of up to 3 % by weight. Naturally, the amounts of all components of one specific mixture add up to 100 %.

Admixtures are usually added to concrete, mortar etc. made of a binder, but can also be added to the binder. Typical admixtures are:
- Accelerators, which speed up the hydration (hardening), like CaO, Ca(OH)₂, CaCl₂, Ca(NO₃)₂, Al₂(SO₄)₃, KOH, K₂SO₄, K₂CO₃, NaOH, Na₂SO₄, Na₂CO₃, NaNO₃, LiOH, LiCl, Li₂CO₃, MgCl₂, MgSO₄.
- Retarders that slow the hydration. Typical polyol retarders are sugar, sucrose, sodium gluconate, glucose, citric acid, and tartaric acid.
- Air entrainments which add and entrain air bubbles, which reduces damage during freeze-thaw cycles, increasing durability.
- Plasticizers that increase the workability of plastic or "fresh" concrete, allowing it be placed more easily, with less consolidating effort. A typical plasticizer is lignosulfonate. Plasticizers can be used to reduce the water content of a concrete while maintaining workability and are sometimes called water-reducers due to this use. Such treatment improves its strength and durability characteristics.
- Superplasticizers (also called high-range water-reducers) that are a class of plasticizers that have fewer deleterious effects and can be used to increase workability more than is practical with traditional plasticizers. Compounds used as superplasticizers include sulfonated naphthalene formaldehyde condensate, sulfonated melamine formaldehyde condensate, acetone formaldehyde condensate and polycarboxylate ethers.
- Pigments can be used to change the color of concrete, for aesthetics.
- Corrosion inhibitors are used to minimize the corrosion of steel and steel bars in concrete.
- Bonding agents are used to create a bond between old and new concrete (typically a type of polymer).
- Pumping aids improve pumpability, thicken the paste and reduce separation and bleeding.
Preferably, (super)plasticizers and/or retarders are comprised. Typically, (super)plasticizers and/or retarders are added in the commonly known amounts, e.g. 0.05 to 1 % by weight, preferably 0.05 to 0.5 % by weight, relative to the sum of CSA cement, SCM and, if applicable, any additional hydraulic components added.

Typical additives are for example but not exclusively fillers, fibres, fabrics / textiles, silica fume and crushed or ground glass . Fillers are e.g. quartz, limestone, dolomite, inert and/or crystalline fly ashes. Fibres are e.g. steel fibres, glass fibres or plastic fibres.

The method according to the invention can be carried out with devices known per se. The CSA cement can be mixed with SCM and further components, if applicable, directly after production. Alternatively, the components can be stored prior to mixing. The binder can be stored and transported as known, e.g. packaged into a cement silo or into cement bags or delivered as ready mix concrete after adding aggregate, water and any other desired addition, possibly after having been stored for some time.

As mentioned before, the method is described as mixing CSA cement and SCM, which shall include a situation where a ground CSA clinker with little or even no sulfate is used and sulfate is admixed as separate component together with eventual additional components to provide the binder. With other words, CSA cement includes a single component comprising at least ground ye'elimite and sulfate as well as the separate components sulfate and ground CSA clinker with no or too little sulfate.

It would even be possible to mix CSA clinker and unground SCM and perfom the grinding on the mixture, but that is not preferred. The grindability usually differs. A separate grinding also provides more flexibility.

The binder according to the invention can be used to make concrete, mortar, plaster and other hydraulically setting building materials. It is also useful for manufacturing special construction chemical compositions like tile adhesives, floor screeds, etc. The use can take place in the same manner as that of known binders or cements. The binder is specifically suitable for applications that benefit from a lowered heat of hydration, i.e. especially for massive structures like dams. It is also very useful for ready mix concrete for all purposes.

The binder according to the invention provides significant further energy saving compared to binders based only on CSA cement. It shows an enhanced strength development compared to the binders comprising CSA and SCM known from the prior art.

The invention will be illustrated further with reference to the examples that follow, without restricting the scope to the specific embodiments described. If not otherwise specified any amount in % or parts is by weight and in the case of doubt referring to the total weight of the composition/mixture concerned.

The invention further includes all combinations of described and especially of preferred features that do not exclude each other. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

### Example 1

Composite binders according to the invention and for comparison were formed from a clinker comprising around 45 g/100 g of beta-C₂S, 35 g/100g of ∑C₄A₃₋ₓFₓ$ and 11 g/100g aluminate (C₃A, CA). The content of ferrites was below 1 g /100 g. Natural anhydrite was used as sulfate source. As supplementary cementitious material either slag or a mixture of slag and limestone was used. To provide comparison mixtures, quartz was used as an inert compoment instead of the SCM. The composite binder mixture, the ratio R_{$/(Y+A+F)} and their strength development is shown in table 1. The strength development was measured as described in EN 196-1 on mortar cubes of 2 cm edge length from a mixture of 2 parts (by weight) cement, 3 parts sand (ISS1, Ø size of 1 mm) and 1 part water. The water/binder ratio was 0.5. The loading velocity was adjusted to 0.4 kN/s.

It can be seen, that at low R_{$/(Y+A+F)} values like e.g. 0.25 or 0.35 no (measureable) contribution of the slag to the strength development was observed during the investigated period of time. For the samples with R_{$/(Y+A+F)} values of 0.55 and 0.74 already after 90 days of hydration an increase of strength of around 7 MPa (0.55) to 12 MPa (0.74) compared to the quartz containing reference was achieved.

**Table 1**

| No. | clinker (incl. sulfate) | slag | limestone | quartz | R_{$/(Y+A+F)} | strength [MPA] after | | | | |
|---|---|---|---|---|---|---|---|---|---|---|
| | | | | | | 1d | 2d | 7d | 28d | 90d |
| 1 | 70 % | 30 % | | | 0.74 | 23.8 | n.d. | 28.5 | 35.3 | 50.0 |
| 2 | 70 % | 25 % | 5 % | | 0.74 | 23.7 | n.d. | 27.8 | 36.2 | 49.1 |
| 3 | 70 % | 20 % | 10 % | | 0.74 | 23.0 | n.d. | 27.3 | 35.4 | 45.0 |
| 4 | 70 % | | | 30 % | 0.74 | 15.0 | n.d. | 28.4 | 34.1 | 37.7 |
| 5 | 74.5 % | 25.5 | | | 0.55 | 20.3 | 23.5 | 34.9 | 37.2 | 45.4 |
| 6 | 74.5 % | | | 25.5 | 0.55 | 19.1 | 21.5 | 32.8 | 38.6 | 37.7 |
| 7 | 73 % | 27 % | | | 0.35 | 19.2 | n.d. | 22.9 | 28.6 | 31.2 |
| 8 | 73 % | 18 % | 9 % | | 0.35 | 21.2 | n.d. | 26.0 | 30.3 | 31.3 |
| 9 | 73 % | | | 27 % | 0.35 | 21.6 | n.d. | 24.3 | 29.4 | 29.6 |
| 10 | 65 % | 35 % | | | 0.25 | 12.8 | 14.7 | 17.6 | 20.6 | 23.7 |
| 11 | 65 % | 30 % | 5 % | | 0.25 | 13.4 | 15.2 | 17.8 | 21.2 | 24.8 |
| 12 | 65 % | 25 % | 10 % | | 0.25 | 14.2 | 15.5 | 18.0 | 21.1 | 24.7 |
| 13 | 65 % | | | 35 % | 0.25 | 15.4 | 17.0 | 21.9 | 26.9 | 33.4 |

| | | | | | | | | | | |
|---|---|---|---|---|---|---|---|---|---|---|
| n.d. - not determined | | | | | | | | | | |

## Claims

1. Composite binder containing at least one calcium sulfoaluminate cement, comprising 20 - 80 % by weight C₄A₃₋ₓFₓ$, with x ranging from 0 to 2,
0 - 70 % by weight C₂S, 3 - 30 % by weight aluminates selected from CA, C₁₂A₇, CA₂, C₃A, 0 - 30 % by weight ferrites selected from C₂A_{y}F_{1-y} with y ranging from 0.2 to 0.8, C₂F, CF, CF₂, 0 - 30 % by weight ternesite,
0 - 30 % by weight calcium sulfate and up to 20 % minor phases, and at least one supplementary cementitious material, wherein a weight ratio of calcium sulfate to the sum of ye'elimite, aluminates and ferrites in the composite binder ranges from 0.5 to 0.85.

2. Composite binder according to claim 1, wherein the supplementary cementitious material is chosen from latent hydraulic materials and/or natural or artificial pozzolanic materials, preferably latent hydraulic slags like ground granulated blast furnace slag, type-C and/or type-F fly ashes, calcined clays or shales, trass, brick-dust, artificial glasses, silica fume, and burned organic matter residues rich in silica such as rice husk ash, and combinations thereof.

3. Composite binder according to claim 1 or 2, wherein the weight ratio of calcium sulfate to the sum of ye'elimite, aluminates and ferrites ranges from 0.55 to 0.85, preferably from 0.6 to 0.85.

4. Composite binder according to at least one of claims 1 to 3, wherein the calcium sulfoaluminate cement comprises 25 - 50 % by weight C₄A₃₋ₓFₓ$, with x ranging from 0 to 2, 10 - 60 % by weight C₂S, 3 - 15 % by weight aluminates, 3 - 25 % by weight ferrites, 3 - 25 % by weight ternesite, 5 - 25 % by weight calcium sulfate and up to 20 % minor phases, wherein the sum of all phases adds up to 100%, with the proviso, that calcium sulfate is provided as separate component and/or comprised in the supplementary cementitious material when it is not contained in the calcium sulfoaluminate cement.

5. Composite binder according to at least one of claims 1 to 4, wherein the content of calcium sulfoaluminate cement ranges from 10 to 90 % by weight, preferably from 20 to 70 % by weight and most preferably from 30 to 60 % by weight of the binder.

6. Composite binder according to at least one of claims 1 to 5, wherein the supplementary cementitious materials comprise 0 to 100 % by weight, preferably from 20 to 80 % by weight and most preferably from 30 - 70 % by weight latent hydraulic materials and 0 to 40 % by weight, preferably from 5 to 35 % by weight and most preferably from 10 - 30 % by weight pozzolanic materials with respect to the total amount of supplementary cementitious materials.

7. Composite binder according to at least one of claims 1 to 6, wherein it comprises at least one of calcium aluminate cement, portland cement, portland cement clinker, limestone, dolomite, ternesite, alkali salts, earth alkali salts, admixtures, and additives

8. Composite binder according to claim 7, wherein the content of a contained calcium aluminate cement, portland cement, portland cement clinker, limestone, ternesite and/or dolomite ranges from 0.1 to 20 % by weight, preferably from 3 to 20 % by weight and most preferred from 5 to 15 % by weight of the binder.

9. Composite binder according to claim 7 or 8, wherein the content of contained alkali salts and/or earth alkali salts ranges from 0.05 % to 5 % by weight, preferably from 0.1 to 3 % by weight and most preferred from 0.5 to 2 % by weight of the binder.

10. Composite binder according to at least one of claims 7 to 9, wherein it contains one or more admixtures chosen from accelerators, retarders, air entrainment agents, plasticizers, super plasticizers, pigments, corrosion inhibitors, bonding agents, and pumping aids.

11. Composite binder according claim 10, wherein the content of a contained admixtures ranges from 0.01 to 5 % by weight, preferably from 0.1 to 3 % by weight and most preferred from 0.5 to 1.5 % by weight.

12. Composite binder according to at least one of claims 7 to 11, wherein it contains additives chosen from fillers, fibres, fabrics / textiles, silica fume, and crushed or ground glass.

13. Method of manufacturing a composite binder comprising the steps:
a) providing at least one calcium sulfoaluminate cement comprising 20 - 80 % by weight C₄A₃₋ₓFₓ$, with x ranging from 0 to 2,
0 - 70 % by weight C₂S, 3 - 30 % by weight aluminates selected from CA, C₁₂A₇, CA₂, C₃A, 0 - 30 % by weight ferrites selected from C₂A_{y}F_{1-y} with y ranging from 0.2 to 0.8, C₂F, CF, CF₂, 0 - 30 % by weight ternesite,
0 - 30 % by weight calcium sulfate and up to 20 % minor phases
b) providing at least one supplementary cementitious material
c) mixing 10 to 90 % by weight calcium sulfoaluminate cement(s) with 10 to 90 % by weight supplementary cementitious material(s), wherein the weight ratio of calcium sulfate to the sum of ye'elimite, aluminates and ferrites ranges from 0.5 to 0.85.

14. Use of a binder according to at least one of claims 1 to 12 to make hydraulically setting building materials such as concrete and mortar or special construction chemical compositions such as tile adhesive and floor screed.

## Patentansprüche

1. Kompositbindemittel, enthaltend mindestens einen Calciumsulfoaluminatzement, umfassend 20 - 80 Gew.-% C₄A₃₋ₓFₓ$ mit x im Bereich von 0 bis 2, 0 - 70 Gew.-% C₂S, 3 - 30 Gew.-% Aluminate, ausgewählt aus CA, C₁₂A₇, CA₂, C₃A, 0 - 30 Gew.-% Ferrite, ausgewählt aus C₂A_{y}F_{1-y} mit y im Bereich von 0,2 bis 0,8, C₂F, CF, CF₂, 0 - 30 Gew.-% Ternesit, 0 - 30 Gew.-% Calciumsulfat und bis zu 20 % Nebenphasen und mindestens ein Klinkerersatzmaterial, wobei das Gewichtsverhältnis von Calciumsulfat zur Summe von Ye'elimit, Aluminaten und Ferriten in dem Kompositbindemittel im Bereich von 0,5 bis 0,85 liegt.

2. Kompositbindemittel gemäß Anspruch 1, wobei das Klinkerersatzmaterial ausgewählt ist aus latent-hydraulischen Materialien und/oder natürlichen oder künstlichen puzzolanischen Materialien, vorzugsweise latent-hydraulischen Schlacken wie Hüttensand, kalkreichen und/oder kalkarmen Flugaschen, kalzinierten Tonen oder Schiefern, Trass, Ziegelmehl, künstlichen Gläsern, Mikrosilika und siliziumreichen Verbrennungsrückständen organischer Stoffe, wie Reisschalenasche, und Kombinationen davon.

3. Kompositbindemittel gemäß Anspruch 1 oder 2, wobei das Gewichtsverhältnis von Calciumsulfat zur Summe von Ye'elimit, Aluminaten und Ferriten im Bereich von 0,55 bis 0,85, vorzugsweise von 0,6 bis 0,85, liegt.

4. Kompositbindemittel gemäß mindestens einem der Ansprüche 1 bis 3, wobei der Calciumsulfoaluminatzement 25 - 50 Gew.-% C₄A₃₋ₓFₓ$ mit x von 0 bis 2, 10 - 60 Gew.-% C₂S, 3 - 15 Gew.-% Aluminate, 3 - 25 Gew.-% Ferrite, 3 - 25 Gew.-% Ternesit, 5 - 25 Gew.-% Calciumsulfat und bis zu 20 Gew.-% Nebenphasen umfasst, wobei sich die Summe aller Phasen zu 100 % summiert, mit der Maßgabe, dass Calciumsulfat als separate Komponente und/oder im Klinkerersatzmaterial enthalten ist, wenn es nicht im Calciumsulfoaluminatzement enthalten ist.

5. Kompositbindemittel gemäß mindestens einem der Ansprüche 1 bis 4, wobei der Gehalt an Calciumsulfoaluminatzement im Bereich von 10 bis 90 Gew.-%, vorzugsweise von 20 bis 70 Gew.-% und am meisten bevorzugt von 30 bis 60 Gew.-%, des Bindemittels liegt.

6. Kompositbindemittel gemäß mindestens einem der Ansprüche 1 bis 5, wobei die Klinkerersatzmaterialien 0 bis 100 Gew.-%, vorzugsweise 20 bis 80 Gew.-% und am meisten bevorzugt 30 bis 70 Gew.-% latent-hydraulische Materialien und 0 bis 40 Gew.-%, vorzugsweise 5 bis 35 Gew.-% und am meisten bevorzugt 10 bis 30 Gew.-% puzzolanische Materialien, bezogen auf die Gesamtmenge der Klinkerersatzmaterialien, umfassen.

7. Kompositbindemittel gemäß mindestens einem der Ansprüche 1 bis 6, wobei es mindestens eines von Calciumaluminatzement, Portlandzement, Portlandzementklinker, Kalkstein, Dolomit, Ternesit, Alkalisalzen, Erdalkalisalzen, Zusatzmitteln und Zusatzstoffen umfasst.

8. Kompositbindemittel gemäß Anspruch 7, wobei der Gehalt eines enthaltenen Calciumaluminatzement, Portlandzement, Portlandzementklinker, Kalkstein, Ternesit und/oder Dolomit im Bereich von 0,1 bis 20 Gew.-%, vorzugsweise von 3 bis 20 Gew.-% und am meisten bevorzugt von 5 bis 15 Gew.-%, des Bindemittels liegt.

9. Kompositbindemittel gemäß Anspruch 7 oder 8, wobei der Gehalt an enthaltenen Alkalisalzen und/oder Erdalkalisalzen im Bereich von 0,05 bis 5 Gew.-%, vorzugsweise von 0,1 bis 3 Gew.-% und am meisten bevorzugt von 0,5 bis 2 Gew.-% des Bindemittels liegt.

10. Kompositbindemittel gemäß mindestens einem der Ansprüche 7 bis 9, wobei es ein oder mehrere Zusatzmittel enthält, ausgewählt aus Beschleunigern, Verzögerern, Luftporenbildnern, Verflüssigern, Fließmitteln, Pigmenten, Korrosionsinhibitoren, Haftvermittlern und Pumphilfen.

11. Kompositbindemittel gemäß Anspruch 10, wobei der Gehalt an enthaltenen Zusatzmitteln im Bereich von 0,01 bis 5 Gew.-%, vorzugsweise von 0,1 bis 3 Gew.-% und am meisten bevorzugt von 0,5 bis 1,5 Gew.-% liegt.

12. Kompositbindemittel gemäß mindestens einem der Ansprüche 7 bis 11, wobei es Zusatzstoffe enthält, ausgewählt aus Füllstoffen, Fasern, Geweben/Textilien, Mikrosilika und gebrochenem oder gemahlenem Glas.

13. Verfahren zur Herstellung eines Kompositbindemittels, umfassend die Schritte:
a) Bereitstellen von mindestens einem Calciumsulfoaluminatzement, umfassend 20 - 80 Gew.-% C₄A₃₋ₓFₓ$ mit x im Bereich von 0 bis 2,
0 - 70 Gew.-% C₂S, 3 - 30 Gew.-% Aluminate, ausgewählt aus CA, C₁₂A₇, CA₂, C₃A, 0 - 30 Gew.-% Ferrite, ausgewählt aus C₂A_{y}F_{1-y} mit y im Bereich von 0,2 bis 0,8, C₂F, CF, CF₂, 0 - 30 Gew.-% Ternesit, 0 - 30 Gew.-% Calciumsulfat und bis zu 20 Gew.-% Nebenphasen
b) Bereitstellen von mindestens einem Klinkerersatzmaterial
c) Mischen von 10 bis 90 Gew.-% Calciumsulfoaluminatzement(en) mit 10 bis 90 Gew.-% Klinkerersatzmaterial(ien), wobei das Gewichtsverhältnis von Calciumsulfat zur Summe von Ye'elimit, Aluminaten und Ferriten im Bereich von 0,5 bis 0,85 liegt.

14. Verwendung eines Bindemittels gemäß mindestens einem der Ansprüche 1 bis 12 zur Herstellung hydraulisch abbindender Baustoffe wie Beton und Mörtel oder bauchemischer Zusammensetzungen wie Fliesenkleber und Estrich.

## Revendications

1. Liant composite contenant au moins un ciment de sulfoaluminate de calcium, comprenant 20 à 80 % en poids de C₄A₃₋ₓFₓ$ avec x allant de 0 à 2, 0 à 70 % en poids de C₂S, 3 à 30 % en poids d'aluminates choisis parmi CA, C₁₂A₇, CA₂, C₃A, 0 à 30 % en poids de ferrites choisis parmi C₂A_{y}F_{1-y} avec y allant de 0,2 à 0,8, C₂F, CF, CF₂, 0 à 30 % en poids de ternésite, 0 à 30 % en poids de sulfate de calcium et jusqu'à 20 % de phases mineures, et au moins un matériau cimentaire supplémentaire, dans lequel le rapport en poids du sulfate de calcium sur la somme de la ye'elimite, des aluminates et des ferrites dans le liant composite varie de 0,5 à 0,85.

2. Liant composite selon la revendication 1, dans lequel le matériau cimentaire supplémentaire est choisi parmi des matériaux hydrauliques latents et/ou des matériaux pouzzolaniques naturels ou artificiels, de préférence des laitiers hydrauliques latents tels que des laitiers de haut fourneau granulés broyés, des cendres volantes de type C et/ou de type F, des schistes calcinés ou argiles calcinées, du trass, du poudre de briques, des verres artificiels, de la fumée de silice et des résidus de matière organique incinérés riches en silice tels que la cendre de balle de riz, et des combinaisons de ceux-ci.

3. Liant composite selon la revendication 1 ou 2, dans lequel le rapport en poids du sulfate de calcium sur la somme de la ye'elimite, des aluminates et des ferrites varie de 0,55 à 0,85, de préférence de 0,6 à 0,85.

4. Liant composite selon au moins l'une des revendications 1 à 3, dans lequel le ciment de sulfoaluminate de calcium comprend 25 à 50 % en poids de C₄A₃₋ₓFₓ$ avec x allant de 0 à 2, 10 à 60 % en poids de C₂S, 3 à 15 % en poids d'aluminates, 3 à 25 % en poids de ferrites, 3 à 25 % en poids de ternésite, 5 à 25 % en poids de sulfate de calcium et jusqu'à 20 % de phases mineures, dans lequel la somme de toutes les phases représente au total 100 %, à condition que le sulfate de calcium soit fourni en tant que composant séparé et/ou compris dans le matériau cimentaire supplémentaire lorsqu'il n'est pas contenu dans le ciment de sulfoaluminate de calcium.

5. Liant composite selon au moins l'une des revendications 1 à 4, dans lequel la teneur en ciment de sulfoaluminate de calcium varie de 10 à 90 % en poids, de préférence de 20 à 70 % en poids et plus préférablement de 30 à 60 % en poids du liant.

6. Liant composite selon au moins l'une des revendications 1 à 5, dans lequel les matériaux cimentaires supplémentaires comprennent 0 à 100 % en poids, de préférence 20 à 80 % en poids et plus préférablement 30 à 70 % en poids de matériaux hydrauliques latents et 0 à 40 % en poids, de préférence 5 à 35 % en poids, et plus préférablement 10 à 30 % en poids de matériaux pouzzolaniques par rapport à la quantité totale de matériaux cimentaires supplémentaires.

7. Liant composite selon au moins l'une des revendications 1 à 6, dans lequel il comprend au moins l'un(e) d'un ciment d'aluminate de calcium, d'un ciment Portland, d'un clinker de ciment Portland, du calcaire, de la dolomie, de la ternésite, des sels alcalins, des sels alcalino-terreux, des adjuvants et des additifs.

8. Liant composite selon la revendication 7, dans lequel la teneur en ciment d'aluminate de calcium, ciment Portland, clinker de ciment Portland, calcaire, ternésite et/ou dolomie contenu(e) varie de 0,1 à 20 % en poids, de préférence de 3 à 20 % en poids et plus préférablement de 5 à 15 % en poids du liant.

9. Liant composite selon la revendication 7 ou 8, dans lequel la teneur en sels alcalins et/ou sels alcalino-terreux contenus varie de 0,05 % à 5 % en poids, de préférence de 0,1 à 3 % en poids et plus préférablement de 0,5 à 2 % en poids du liant.

10. Liant composite selon au moins l'une des revendications 7 à 9, dans lequel il contient un ou plusieurs adjuvant(s) choisi(s) parmi des accélérateurs, des retardateurs, des agents d'entraînement d'air, des plastifiants, des superplastifiants, des pigments, des inhibiteurs de corrosion, des agents de liaison et des auxiliaires de pompage.

11. Liant composite selon la revendication 10, dans lequel la teneur en adjuvants contenus varie de 0,01 à 5 % en poids, de préférence de 0,1 à 3 % en poids et plus préférablement de 0,5 à 1,5 % en poids.

12. Liant composite selon au moins l'une des revendications 7 à 11, dans lequel il contient des additifs choisis parmi des charges, des fibres, des tissus/textiles, de la fumée de silice et du verre concassé ou broyé.

13. Procédé de fabrication d'un liant composite comprenant les étapes :
a) fournir au moins un ciment de sulfoaluminate de calcium comprenant 20 à 80 % en poids de C₄A₃₋ₓFₓ$ avec x allant de 0 à 2, 0 à 70 % en poids de C₂S, 3 à 30 % en poids d'aluminates choisis parmi CA, C₁₂A₇, CA₂, C₃A, 0 à 30 % en poids de ferrites choisis parmi C₂A_{y}F_{1-y} avec y allant de 0,2 à 0,8, C₂F, CF, CF₂, 0 à 30 % en poids de ternésite, 0 à 30 % en poids de sulfate de calcium et jusqu'à 20 % de phases mineures
b) fournir au moins un matériau cimentaire supplémentaire
c) mélanger 10 à 90 % en poids de ciment(s) de sulfoaluminate de calcium avec 10 à 90 % en poids de matériau(x) cimentaire(s) supplémentaire(s), dans lequel le rapport en poids du sulfate de calcium sur la somme de la ye'elimite, des aluminates et des ferrites est compris entre 0,5 et 0,85.

14. Utilisation d'un liant selon au moins l'une des revendications 1 à 12 pour fabriquer des matériaux de construction à prise hydraulique tels que du béton et du mortier ou des compositions chimiques de construction spéciales telles que la colle pour carrelage et la chape.
